Europäisches Patentamt

European Patent Office

Office européen des brevets

(11) Veröffentlichungsnummer : **0 428 586 B1**

(12) **EUROPÄISCHE PATENTSCHRIFT**

(45) Veröffentlichungstag der Patentschrift :
**17.06.92 Patentblatt 92/25**

(21) Anmeldenummer : **89909118.5**

(22) Anmeldetag : **10.08.89**

(86) Internationale Anmeldenummer :
**PCT/AT89/00071**

(87) Internationale Veröffentlichungsnummer :
**WO 90/01410 22.02.90 Gazette 90/05**

(51) Int. Cl.⁵ : **B32B 3/12,** B32B 31/14,
B29D 24/00, B29C 67/14

(54) **FORMKÖRPER AUS KUNSTSTOFF UND VERFAHREN UND EINRICHTUNG ZU SEINER HERSTELLUNG.**

(30) Priorität : **10.08.88 AT 2005/88**

(43) Veröffentlichungstag der Anmeldung :
**29.05.91 Patentblatt 91/22**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**DE-A- 2 026 044**
**FR-A- 924 670**
**GB-A- 1 302 715**
**GB-A- 1 347 689**

(73) Patentinhaber : **GRAF, Eva**
**Guido Holzknechtstrasse 16**
**A-3300 Amstetten (AT)**

(72) Erfinder : **GRAF, Eva**
**Guido Holzknechtstrasse 16**
**A-3300 Amstetten (AT)**

(74) Vertreter : **Wildhack, Helmut, Dipl.-Ing. Dr. et al**
**Patentanwälte Dipl.-Ing. Leo Brauneiss**
**Dipl.-Ing. Dr. Helmut Wildhack Landstrasser**
**Hauptstrasse 50 Postfach 281**
**A-1031 Wien (AT)**

EP 0 428 586 B1

Jouve, 18, rue Saint-Denis, 75001 PARIS

## Beschreibung

Die Erfindung bezieht sich auf einen Formkörper aus Kunststoff, mit im Vergleich zum Gewicht hoher Festigkeit, bei welchem zwischen zumindest zwei äußeren, durch Fasereinlagen verstärkten, ausgehärteten oder verfestigten (thermoplastischen) Kunststoff(harz)schichten, insbesondere aus Epoxy oder Polyester, zumindest eine innere Lage angeordnet ist, die zumindest einen Hohlraum bildet bzw. umfaßt, der mit einem Gas, insbesondere Luft, gefüllt ist, wobei diese Lage(n) mit den Kunststoff(harz)schichten zu einem starren Körper verbunden ist (sind) und die bzw. jede Lage zumindest einen zwischen den beiden äußeren Kunststoffschichten gelegenen, dicht abgeschlossenen, gegebenenfalls langgestreckten Hohlraum aufweist, der von einer faserverstärkten, ausgehärteten oder verfestigten (thermoplastischen) Kunststoffharzschicht allseits umgeben ist, welche Kunststoff(harz)schicht flächig an den beiden äußeren Kunststoffschichten anliegt und mit diesen fest bzw. starr verbunden ist. Weiters bezieht sich die Erfindung auf ein Verfahren und eine Einrichtung zur Herstellung eines solchen Formkörpers.

Auf zahlreichen technischen Gebieten besteht die Forderung nach Formkörpern aus Kunststoff, welche einerseits sehr widerstandsfähig gegen Verformungen, anderseits aber leicht sind. Beispiele für solche Anwendungsgebiete sind das Bauwesen, der Fahrzeugbau, Schiffsbau, Flugzeugbau, aber auch Sportgeräte aller Art, z.B. Surbretter, Surf- und Segelmasten, Segellatten usw. Die bisherigen Vorschläge zur Herstellung solcher Formkörper konnten aber nicht befriedigen, denn die beiden eingangs erwähnten Forderungen scheinen sich zu widersprechen und konnten bisher nicht beide zugleich in befriedigendem Maß erfüllt werden. So ist es z.B. bekannt, Kunststofformkörper auszuschäumen oder mit einer zwischen zwei äußeren Laminaten angeordneten Wabenkonstruktion zu versehen, welche aus thermoplastischem Material oder aus Karton besteht. Ist die Ausschäumung bzw. die Wabenkonstruktion so starr, daß sie beim Formvorgang, welcher durch Niederziehen der in eine Form eingebrachten Schichten unter Vakuum erfolgt, im wesentlichen formsteif ist, dann unterbricht diese Ausschäumung oder Wabenkonstruktion die Verbindung zwischen den äußeren Laminaten, was die Festigkeit des fertigen Formkörpers nachteilig beeinflußt. Ist aber die Ausschäumung oder Wabenkonstruktion nicht gegen den beim Ansetzen des Vakuums von außen einwirkenden Druck beständig, dann ist einerseits die Formgebung des Kunststoffkörpers problematisch und anderseits bewirkt die Flachdrückung des Kunststoffkörpers eine Erhöhung dessen spezifischen Gewichtes. Außerdem ist bei der Verwendung der beschriebenen Wabenstruktur nachteilig, daß diese gegen erhöhte Temperatur nicht beständig ist, so daß solche Kunststoffe nicht einsetzbar sind, welche bei Temperaturen ab etwa 130°C härten.

Ferner beschreibt die GB-A- 1 302 715 einen Formkörper aus Kunststoff, wie er in bisher üblicher Weise gefertigt wurde. Diese Fertigungsweise ist z.B. Seite 1, Zeilen 58 und 59, klar zu entnehmen, wo angeführt wird, daß die Kernteile "von innen her unter Druck gesetzt werden". Bei der Herstellung des Formkörpers nach der GB-A wird somit derart vorgegangen, daß sämtliche Kernteile in Form von an eine Druckpumpe angeschlossenen Schläuchen vorliegen, diese Schläuche in die Form eingelegt werden und beim Aushärten der Kunststoffe unter Druck gesetzt werden. Die Kernteile sind dicht, um dem Innendruck standhalten zu können; dies geht auch aus der Seite 2, Zeilen 37 bis 44 hervor.

Bei dem fertiggestellten Formkörper gemäß der GB-A sind die Kernteile an den Rändern des Formkörpers offen und bilden Durchgänge in den Formkörpern. Dies ist darauf zurückzuführen, daß die Druckzufuhr zu den Kernteilen der Formkörper gemäß der GB-A während des Aushärtungsvorganges aufrecht erhalten werden muß. Nach der herkömmlichen Vorgangsweise ist es überhaupt nicht möglich, lokal begrenzte Hohlräume im Inneren eines Formkörpers auszubilden, da derartige Hohlräume immer durch Schläuche mit den außerhalb der Form liegenden Druckpumpen verbunden sein mußten, um aufgeblasen zu werden.

Die Erfindung setzt sich zur Aufgabe, diese Nachteile zu vermeiden und einen Formkörper aus Kunststoff der eingangs geschilderten Art so zu verbessern, daß er im Vergleich zu bekannten Produkten ein wesentlich geringeres Gewicht, anderseits aber eine zumindest ebenso hohe, zumeist sogar noch wesentlich höhere Festigkeit hat.

Die Erfindung löst diese Aufgabe dadurch, daß der (die) Hohlraum(räume) von dem (den) Innenraum(räumen) von in Bezug auf das Gas dichten bzw. dicht abgeschlossenen Kunststoffhüllen, vorzugsweise aus Polyester, Polypropylen, Polyäthylen oder PVC, insbesondere in Form von an ihren Enden dicht verschlossenen Schläuchen oder dicht verschlossenen Pölstern, gebildet ist (sind), die von der faserverstärkten oder verfestigten Kunststoffschicht umgeben sind, wobei die die durch einen äußeren Unterdruck aufgeweiteten Kunststoffhüllen umfassenden Lage(n) des kernlos ausgebildeten Formkörpers zwischen den Kunststoffschichten weitgehend gasblasenfrei aneinander bzw. an den Kunststoffschichten anliegt(en). Diese zwischen den äußeren faserverstärkten Kunststoffschichten liegende, den Hohlraum umgebende Kunststoffschicht bewirkt durch ihre Faserverstärkung und ihre Verbindung mit den beiden äußeren Schichten eine Querversteifung des Kunststoffkörpers, welche auch hohe Belastungen aufzunehmen vermag, so daß der fertige Kunststoffkörper eine hohe Festigkeit gegenüber allen mechanischen Belastungen, insbesondere gegen Druck, Zug, Biegung und

2

Torsion aufweist, wobei die erwähnte, die Hohlräume umgebende mittige Kunststoffschicht die Rolle einer Armierung zwischen den beiden äußeren Kunststoffschichten spielt. Die von dieser mittigen Kunststoffschicht umgebenen Hohlräume behalten durch die Steifigkeit der mittleren Kunststoffschicht ihre Gestalt auch bei hohen Belastungen bei und bewirken durch ihre Gasfüllung eine wesentliche Gewichtsreduzierung gegenüber bekannten Formkörpern, da diese Hohlräume sehr groß und in großer Zahl im Formkörper angeordnet werden können, ohne an Festigkeit zu verlieren. Besonders vorteilhaft ist hierbei, daß der bzw. die gasgefüllten Hohlräume durch ihren dichten Abschluß ein Entweichen des Gases beim Formvorgang bzw. bei der Druckaufbringung verhindern und dadurch als flächige Abstützung dienen, welche verhindert, daß die äußeren Kunststoffschichten flach aneinandergedrückt werden. Der erwähnte Druck beim Ansetzen des Vakuums bewirkt aber, daß die Kunststoffschicht der mittleren Lage sich flächig an die beiden äußeren Schichten anlegt, so daß beim Aushärtungsvorgang dort eine flächige Verbindung und damit die erwähnte hohe Festigkeit erzielt wird.

Ein wesentlicher Unterschied zwischen den herkömmlichen Formkörpern, insbesondere solchen nach der GB-A, und den erfindungsgemäßen Formkörpern liegt darin, daß erfindungsgemäß die einzelnen Schichten im wesentlichen gasblasenfrei aneinander zu liegen kommen bzw. Gasblasen nicht die Kontaktierung der eingelegten Gewebefasern od. dgl. bzw. der Kunststoffmassen behindern; erfindungsgemäß sind diese Gasblasen durch Anlegen des Unterdruckes aus der Form gesaugt, sodaß nahezu homogene und nahezu völlig gasblasenfreie Formkörper erstellt werden. Es zeigte sich, daß keine Luftbläschen auf den Gewebeeinlagen bzw. an den Außenflächen der eingesetzten Kunststoffhülen verbleiben, sodaß ein inniger Kontakt der Gewebe des Kunststoffes und der eingesetzten Kunststoffhüllen erreich wurde, wodurch sich eine ausgesprochen hohe Festigkeit einem Formkörpers ergab. Stellt man einen erfindungsgemäßen Formkörper einem herkömmlichen Formkörper gegenüber, so kann man ohne weiteres feststellen, nach welchen Verfahren die Formkörper gefertigt wurden, da die nach den herkömmlichen Verfahren gefertigten Formkörper von Gasblasen, Lunkern und Hohlräumen durchzogen sind, wogegen die erfindungsgemäßen Formkörper nahezu homogen und blasenfrei sind. Darüberhinaus erkennt man auch bei den erfindungsgemäß hergestellten Formkörpern, daß die Kunststoffhülen durch den von außen angelegten Unterdruck unregelmäßig bzw. je nach den Gegebenheiten des Aufbaues verformt bzw. in die von den abgesaugten Gasblasen zurückgelassenen Hohlräume hineingezogen worden sind; die Kunststoffhülen weisen somit eine Außenfläche auf, die wesentlich unregelmäßiger gebildet ist, als die Kernkörper der nach den herkömmlichen Verfahren ausgebildeten Formkörper. Schließlich entfällt bei den erfindungsgemäßen Formkörpern das Verschließen der Außenfläche bzw. der Öffnungen der abgeschnittenen Druckschläuche nach dem Entformen, so daß die Formkörper erstmals serienmäßig hergestellt werden können und mit durchgehender und fertiggestellter bzw. -bearbeiteter Oberfläche dem Nacharbeiten vorliegen.

Die Hohlräume können verschiedene Form besitzen. Vorteilhaft verwendet man Lagen aus vorgefertigten Schläuchen bzw. Folienschläuchen, Polsterfolien, wie sie aus der Verpackungsindustrie bekannt sind, od.dgl.

Die handelsüblichen Schläuche lassen sich leicht verarbeiten und erfüllen alle an sie gestellten Anforderungen. Im Rahmen der Erfindung ist es besonders zweckmäßig, wenn der Schlauch mit der ausgehärteten Kunststoffschicht umwickelt ist, da sich auf diese Weise die allseitige Umgebung des Hohlraumes durch die ihn abstreifende ausgehärtete Kunststoffchicht am leichtesten erzielen läßt.

Es können ferner Lagen mit unterschiedlichen Hohlräumen in beliebiger räumlicher Anordnung kombiniert werden. Die Art der Größe der Hohlräume hängt von der Festigkeit und der Art des Gegenstandes ab.

Die Festigkeit und das Gewicht des Gegenstandes kann beeinflußt werden, wenn zwischen der(n) Lage(n) bzw. zwischen der(n) Lage(n) und den Kunststoffschichten Mikroballons aus Glas oder Kunststoff, vorzugsweise mit einem Durchmesser von 0,05 bis 0,3 mm, angeordnet sind. Die Mikroballons ermöglichen ferner eine bessere Verteilung des Kunststoffes im Formkörper, wenn die Gewebelagen erst in der Form mit Kunststoff getränkt bzw. versetzt werden.

Das erfindungsgemäße Verfahren zur Herstellung eines erfindungsgemäßen Formkörpers geht aus von einem Verfahren, bei welchem in einer Form zumindest zwei aushärtbaren(s) oder verfestigbaren(s) (thermoplastischen) Kunststoff(harz) enthaltende bzw. damit getränkte Faser- bzw. Gewebeschichten (Kunststoffschichten) und dazwischen zumindest eine mit zumindest einem Hohlraum versehene Lage angeordnet werden, welche Lage(n) mit den Kunststoffschichten verbunden wird (werden). Ausgehend davon besteht das erfindungsgemäße Verfahren darin, daß für die Lage(n) zumindest ein mit einem Gas, insbesondere Luft, gefüllter, dicht abgeschlossener Hohlkörper mit biegsamen oder dehnbaren, seine Wände bildenden Kunststoffhüllen verwendet wird, der vor dem oder bei dem Einlegen in die Form mit einer Umhüllung aus Faser- bzw. Gewebeeinlagen umgeben wird, welche Umhüllung gegebenenfalls aushärtbaren(s) oder verfestigbaren(s), (thermoplastischen) Kunststoff(harz) enthält oder damit nach dem Einlegen in die Form getränkt wird und welche Umhüllung durch Aushärtung oder Verfestigung des in den Faser- bzw. Gewebeeinlagen enthaltenen oder des in diese eingebrachten Kunststoffes mit dem Kunststoff der Kunststoffschichten fest verbunden wird und daß zur Verbindung der Lage(n) mit den Kunststoffschichten bzw. zur Verbindung der Lagen untereinander der insbesondere kernlose Formkörper, gegebenenfalls nach oder bei gleichzeitiger Erwärmung desselben, in der Form einem Unterdruck (Vakuum) ausgesetzt wird bzw. in die Form niedergezogen wird, sodaß die Ausbildung des Verbindungsdruckes für die Kunststoffschichten und die Lage(n) im Formkörper ausschließlich durch Anlegen des Unterdruckes an den Formkörper und gegebenenfalls Erwärmung der in den Hohlräumen enthaltenen Luft und des damit verbundenen Aufblähens der in den Lagen vorgesehenen Hohlkörper erfolgt.

Wie bereits erwähnt, bildet ein solcher Hohlkörper beim Anlegen des Vakuums eine nachgiebige Absteifung, welche verhindert, daß die beiden äußeren Kunststoffschichten direkt aneinandergedrückt werden können. Wohl verformt sich dieser Hohlkörper unter dem auf ihn ausgeübten Druck, aber er kann höchstens verflacht, nicht aber völlig flachgedrückt werden. Insbesondere dann, wenn mehrere Hohlkörper nebeneinander bzw. gegebenenfalls auch übereinander angeordnet sind, kommen die Hohlkörper bei der Verflachung zur Anlage aneinander und stützen sich gegenseitig ab, so daß schließlich eine steife Mittelschicht erzielt wird, welche eine weitere Annäherung der äußeren Kunststoffschichten nicht zuläßt. Durch geeignete Dimensionierung kann leicht erreicht werden, daß diese sich einstellende Gestalt die endgültig gewünschte Form des Kunststoffkörpers ist. Wennwie erwähnt - mehrere Hohlkörper in der inneren Lage vorhanden sind, so bilden ihre Umhüllungen nach der Aushärtung des Kunststoffes unter Wärme- und Druckeinwirkung ein starres Skelett, welches mit dem Kunststoff der äußeren Schichten so fest verbunden ist, daß die gewünschte Festigkeit erzielt ist, insbesondere wenn für die aushärtbaren Kunststoffe der einzelnen Schichten bzw. der Umhüllung jeweils das gleiche Material verwendet wird.

Als faserverstärkte Kunststoffschichten bzw. Umhüllungen können Pre-Pregs oder vorgefertigte mit Kunststoff getränkte Gewebelagen oder vorgehärtete bzw. vorgefertigte faser- bzw. gewebeverstärkte Kunststoffschichten eingesetzt werden oder es werden in die Form lediglich die Faser- bzw. Gewebeeinlagen für die Kunststoffschichten eingegeben und durch Einbringen (Einsaugen) von flüssigem Kunststoff(harz) mit diesem versetzt bzw. getränkt.

Eine bevorzugte Ausführungsform des erfindungsgemäßen Verfahrens besteht darin, daß als Hohlkörper zumindest ein Kunststoffschlauch, vorzugsweise aus einem bei der Aushärtungstemperatur beständigen Kunststoff, insbesondere Polyester, Polypropylen, Polyäthylen oder PVC, verwendet wird, der an seinen Enden vor dem Einlegen in die Form für das Gas dicht verschlossen wird. Wie erwähnt, sind solche Kunststoffschläuche handelsüblich und leicht zu verarbeiten. Es bereitet auch keine Schwierigkeiten, sie gemäß einer Weiterbildung dieses Verfahrens mit dem durch Fasereinlagen verstärkten Kunststoff zu umwickeln. Der gasdichte Verschluß dieser Kunststoffschlauchstücke kann durch Verschweißung leicht erzielt werden, gegebenenfalls kann jedoch auch eine Verklebung stattfinden. Das in den Kunststoffschlauchstücken befindliche Gas ist zweckmäßig Luft, dieses Gas kann, jedoch muß nicht, unter Überdruck stehen.

Es ist im Rahmen des erfindungsgemäßen Verfahrens besonders günstig, als durch Fasereinlagen verstärkten Kunststoff Pre-Pregs, vorzugsweise aus Epoxy oder Polyester, zu verwenden. Solche Pre-Pregs sind bekantlich vorimprägnierte Fasereinlagen die mit einem vorbestimmten Anteil an Reaktionsharzmasse imprägniert und ohne weitere Zusätze unter Warme, in der Regel ohne Druck, härtbar sind.

Vorgesehen ist, daß zur Herstellung von vorgehärteten Formkörpern der Kunstoff im Formkörper nur bis zu einer Temperatur erwärmt wird, die unterhalb der Aushärtetemperatur des Kunststoffes gelegen ist.

Bei der erfindungsgemäßen Vorgangsweise erfolgt kein Aufblähen der Hohlräume durch Einbringen eines Druckgases in die Hohlräume; das Evakuieren dient zur Ausbildung des erforderlichen Verbindungsdruckes.

Eine erfindungsgemäße Einrichtung ist dadurch gekennzeichnet, daß die Form zumindest einen zu einer Vakuumquelle und/oder einer Vakuumpumpe führenden Auslaß und zumindest einen Anschluß zum Ansaugen von Kunststoff aus einem Behälter für insbesondere erwärmten Kunststoff aufweist. Vorzugsweise sind Absperrvorrichtungen für die zur Form führende Kunststoffzuleitung und/oder die von der Form abgehende Absaugleitung vorgesehen. Vorteilhaft ist es ferner, wenn eine Steuereinrichtung für den Druck und/oder die Temperatur in der Form und/oder die Menge des in die Form angesaugten Kunststoffes und/oder die Temperatur des angesaugten Kunststoffes vorgesehen sind bzw. wenn die Steuereinrichtung mit der Heizung des Kunststoffbehälters und/oder den Absperrvorrichtungen und/oder einer Heizeinrichtung bzw. Kühleinrichtung für das Heiz- bzw. Kühlfluid der Form verbunden ist.

In der Zeichnung sind beispielsweise Ausführungsformen des erfindungsgemäßen Verfahrens bzw. des damit hergestellten Formkörpers schematisch dargestellt. Die Fig.1 und 2 zeigen jeweils verschiedene Ausführungsformen des Verfahrens, Fig.3 eine Einrichtung zur Durchführung des Verfahrens und Fig.4 und 5 den Aufbau bzw. das Material für den Formkörper.

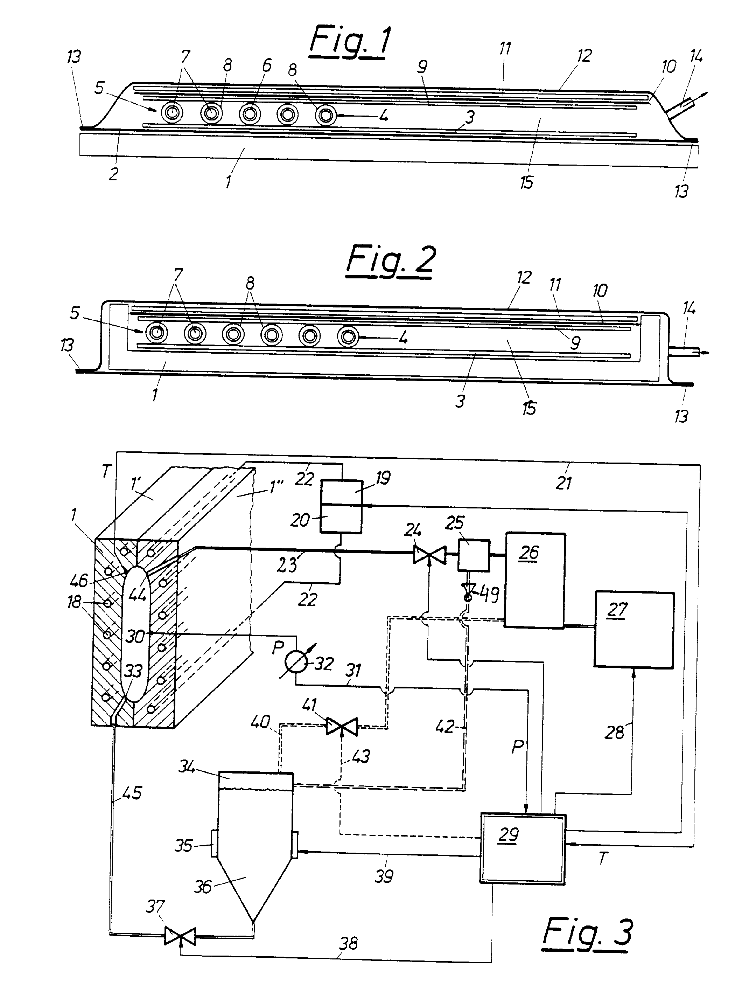

Bei der Ausführungsform nach Fig.1 dient eine ebene Arbeitsplatte als Form 1, an die der herzustellende Kunststoffformkörper eben anzuformen ist. Hiezu wird auf diese Form 1 zunächst eine luftdichte Folie 2, z.B. aus thermoplastischem Kunststoffmaterial, aufgelegt. Auf diese Folie 2 wird eine Schicht 3 aus einem durch Fasereinlaaen verstärkten, aushärtbaren Kunststoffmaterial, insbesondere Epoxy oder Polyester, gegebenenfalls auch Acrylatharz oder Polyurethan, aufgelegt. Die Fasereinlagen können in Form von Geweben, insbesondere aus Glasfasern, Kohlefasern, Kevlar vorgesehen sein, jedoch auch in Form von Einzelfasern, Fastersträngen usw-. Die Vera-wendung eines Pre-Pregs ist zweckmäßig, insbesondere eines Klebe-Pre-Pregs, also eines solchen Pre-Pregs, welches bei Raumtemperatur an einem gleichartigen Pre-Preg klebt. Es kann jedoch auch im Naßlaminierverfahren gearbeitet werden, d.h. es können die Fasereinlagen zugeschnitten und mit heiß- oder kalthärtendem Kunstharz getränkt (laminiert) werden, wonach das überschüssige Kunstharz entfernt wird. Auf eine so vorbereitete Schicht 3 wird zumindest ein Hohlkörper 4 als Mittellage 5 aufgelegt, vorzugsweise mehrere solche Hohlkörper 4 neben- oder gegebenenfalls auch übereinander. Jeder dieser Hohlkörper 4 ist von einem Abschnitt eines Schlauches 6 aus Kunststoff, vorzugsweise Polyester, Polypropylen, Polyäthylen oder PVC gebildet. Es ist zweckmäßig, dieses Material weich zu wählen, um die Hohlkörper 4 in jener Gestalt anordnen zu können, in welcher sie für den herzustellenden Kunststofformkörper am zweckmäßigsten sind. Jedes dieser Schlauchstücke 6 ist an seinen beiden Enden verschlossen und mit Luft, gegebenenfalls auch mit einem anderen Gas, gefüllt; ein Überdruck dieser Gasfüllung im vom Schlauch 6 umschlossenen Hohlraum 7 ist in der Regel nicht erforderlich. Der gasdichte Verschlüß der Schlauchenden erfolgt zweckmäßig durch Verschweißen. Jeder einzelne Schlauch 6 ist von einer faserverstärkten, aushärtbaren Kunststoffschicht 8 allseits umgeben, zweckmäßig mit dieser Schicht 8 umwickelt. Es ist zweckmäßig, für diese Schicht 8 ebenfalls Pre-Pregs zu wählen, vorzugsweise Klebe-Pre-Pregs, und zwar aus demselben Material, aus welchem die Schicht 3 besteht. Sobald diese Mittellage 5 mit gewünschter Anzahl und Anordnung der Schläuche 6 fertiggestellt ist, wird auf diese Mittellage 6 eine weitere Schicht 9 aufgelegt, deren Material und Ausbildung gleich ist der Schicht 3. Auf den so gebildeten sandwichartigen Aufbau wird eine thermoplastische Folie 10 aufgelegt, die von einer luftdurchlässigen Schicht 11, z.B. einer Juteschicht, abgedeckt wird. Darauf wird eine weitere thermoplastische Folie 12 aufgelegt, die so groß bemessen und deren Material so gewählt ist, daß ihre über den sandwichartigen Aufbau vorstehenden Ränder bei 13 mit der thermoplastischen Folie 2 luftdicht verschweißt werden können. An die Folie 12 ist der Saugstutzen 14 einer Evakuierungsvorrichtung angeschlossen, durch welche der Innenraum 15 zwischen den beiden Folien 2,12 mit Ausnahme der in den Hohlräumen 7 befindlichen Luft evakuiert werden kann. Das angesetzte Vakuum drückt nun den gesamten sandwichartigen Aufbau an die Form 1 an. Sobald diese Form 1 auf etwa 100 bis 140°C (immer noch unter Ansatz des Vakuums) erhitzt ist, wird das Harz in den nur teilweise ausgehärteten Kunststoffschichten 3,8,9 kurzfristig flüssig und diese Schichten kleben zusammen. Das angesetzte Vakuum bewirkt, daß hiebei die Hohlräume 7 der Schläuche 6 in eine flache Form gedrückt, jedoch nicht völlig flachgedrückt werden. Vielmehr weichen die von den Schläuchen 6 gebildeten Wände der Holräume 7 nachgiebig aus, solange, bis sich diese Wände aneinander abstützen. Zugleich legen sich diese Wände an den den beiden Außenschichten 3,9 zugewendeten Seiten flach an diese Schichten 3,9 an, so daß dort eine flächige innige Verbindung der Umwickelungen 8 der Schläuche 6 mit den Schichten 3,9 auftritt. Eine örtliche Luftblasenbildung in den Hohlräumen 7 der Schläuche 6 kann nicht auftreten, da sich die Luft ja in den Schläuchen 6 gleichmäßig verteilt. Ebenso treten nirgends Luftblasen außerhalb der Schläuche 6 auf, da die luftdurchlässige Schicht 11 dafür sorgt, daß der Absaugvorgang überall über die gesamte Fläche des herzustellenden Kunststofformkörpers voll wirksam werden kann. Die Folie 10 verhindert hierbei, daß die luftdurchlässige Schicht 11 an der Schicht 9 beim beschriebenen Aushärtevorgang anklebt, was durch entsprechende Materialwahl der Folie 10 leicht zu erreichen ist.

Nach dem Aushärten des Materiales der Schichten 3,8,9 wird der Formkörper abgekühlt und daraufhin wird das Vakuum abgesetzt. Die Folien 2,12 werden dann aufgeschnitten und abgenommen und schließlich die luftdurchlässige Schicht 11 mit der Folie 10 vom fertigen Formkörper abgezogen.

Der Formkörper kann dann einer üblichen Weiterbehandlung, z.B. einem Schleifvorgang, zugeführt werden.

Bei der Ausführungsform des Verfahrens nach Fig.2 wird im wesentlichen in gleicher Weise wie bei Fig.1 beschrieben vorgegangen, jedoch findet eine hohle Form 1 Verwendung, in welche die einzelnen Schichten, wie beschrieben, eingelegt werden.

Temperatur und Dauer des Aushärtevorganges richten sich nach dem jeweils nach dem verwendeten Kunststoffmaterial.

Die mit den Klebe-Pre-Pregs 8 umwickelten luftgefüllten Schläuche 6 werden je nach den Anforderungen des herzustellenden Kunststofformkörpers bzw. nach der gewünschten Spannungs- und Festigkeitsverteilung angeordnet, gegebenenfalls in mehreren Lagen. Die in den Fig.1 und 2 dargestellte Parrallelanordnung ist nicht zwingend, vielmehr können die Schläuche 6 in jeder gewünschten Anordnung, z.B. ringförmig, aber auch diagonal oder stehend, angeordnet werden.

Das Verhältnis zwischen Volumen und Gewicht des hergestellten Kunststofformkörpers läßt sich durch die Größe der verwendeten Schläuche 6 bzw. der Hohlräume 7 nach Wunsch beeinflussen. Durch entsprechende Verteilung der von den Schichten 3,8,9 gebildeten Laminate bzw. Pre-Pregs, ist auch jedwede gewünschte Gewichtsaufteilung innerhalb des herzustellenden Kunststofformkörpers erzielbar, ebenso wie eine Anpassung an jedwede Gestalt der Form. Weiters ist es möglich, die einzelnen Schichten nach Wunsch einzufärben, wodurch jedwede Farbgebung erzielbar ist.

Selbstverständlich kann sowohl mit Pre-Pregs als auch im Naßlaminierverfahren gearbeitet werden. Im erteren Fall werden die Pre-Pregs auf die gewünschte Größe zugeschnitten und in die Form eingelegt bzw. auf diese aufgelegt. Wie erwähnt, ist die Verwendung von Klebe-Pre-Pregs vorteilhaft. Wie bekannt, müssen die Pre-Pregs kühl gelagert werden, um später ausgehärtet werden zu können. Der verwendbare Flußbereich der Pre-Pregs ist sehr groß, in der Regel wird mit einem Fluß von etwa 6 bis 20% gearbeitet.

Im Naßlaminierverfahren werden die verwendeten Fasereinlagen, z.B. Gewebe, zugeschnitten und mit heiß- oder kalthärtendem Kunststoff getränkt (laminiert), worauf überschüssiger Kunststoff entfernt wird.

Die bevorzugten Kunststoffarten sind Polyester und Epoxyd, aber gegebenenfalls auch Polyurethan und Acrylharze.

Die erfindungsgemäße Vorgangsweise gemäß der die Gewebe-bzw. Faserlagen mit Kunststoff getränkt werden, nachdem sie sich bereits in der Form befinden, wird nunmehr anhand der Fig.3 näher erläutert. Fig.3 zeigt eine Einrichtung zur Durchführung des erfindungsgemäßen Verfahrens mit einer Form 1, die aus zwei dicht miteinander verbindbaren Formteilen 1′ und 1″ besteht. Die beiden Formteile 1′ und 1″ sind mit Fluidleitungen 18 versehen, durch die ein Heiz- oder Kühlfluid geführt werden kann. Die Fluidleitungen 18 sind über Leitungen 22 an eine Heizeinrichtung 19 bzw. Kühleinrichtung 20 für das Fluid angeschlossen, welche Heizeinrichtung 19 bzw. Kühleirichtung 20 von einer Steuereinrichtung 29 steuerbar sind.

In die schematisch dargestellte Form 1 können, ähnlich wie in Fig.1 und 2 bereits dargestellt, die den Formkörper bildenden Formkörperteile, d.h. Kunststoffschichten und entsprechende Hohlräume enthaltende Lagen, eingelegt werden. Nach dem Einlegen dieser Bestandteile und allfälliger Folien zur Ausgestaltung der Oberfläche des Formkörpers wird aus der geschlossenen Form 1 über einen Auslaß 44 und eine Leitung 23 über ein Absperrventil 24 und einen Zwischenspeicher 25 die in der Form 1 befindliche Luft in einen Vakuumbehälter 26 abgesaugt, der von einer Vakuumpumpe 27 auf Unterdruck gehalten wird. Der Vakuumbehälter 26 ist vorhanden, um eine gewisse Speicherkapazität für das Vakuum zu erhalten und beim Eindringen von Kunststoff in die Form 1 das Vakuum unverändert aufrecht erhalten zu können. Die Auslässe 44 können an entsprechenden Stellen der Form 1 vorgesehen werden; üblicherweise sind zumindest zwei Auslässe vorgesehen

Die Form 1 besitzt ferner zumindest einen Anschluß 33, über den mittels einer Leitung 45 und ein Absperrventil 37 gegebenenfalls erwärmter Kunststoff 36 aus einem Kunststoffbehälter 34 zuführbar ist. Dieser Kunststoff 36 wird aufgrund des in der Form 1 herrschenden Unterdrucks in die Form eingesaugt und dringt durch die im Formkörper ausgebildeten Zwischenräume zu den vorgesehenen Stellen vor bzw. umhüllt die Fasern und Gewebe, die zur Verstärkung des Formkörpers vorgesehen sind. Der Kunststoffbehälter 34 kann mit einer Heizeinrichtung 35 auf entsprechende Temperatur gebracht werden; über eine Leitung 39 wird die Heizeinrichtung 35 von der Steuereinrichtung 29 eingeregelt. Mit dem Absperrventil 37, das von der Steuereinrichtung 29 über die Leitung 38 betätigbar ist, kann die Menge des in die Form 1 eingebrachten Kunststoffes eingeregelt werden.

Zur Feststellung der Temperatur der Form 1 ist zumindest ein Temperatorsensor 46 über eine Leitung 21 mit der Steuereinrichtung 29 verbunden. Ferner ist ein Drucksensor 30 über eine Leitung 31 mit der Steuereinrichtung 29 verbunden; allenfalls wird der in der Form 1 herrschende Druck mittels eines Anzeigegerätes 32 optisch angezeigt. Die Druckmessung ermöglicht eine präzise Wiederholung der Kunststoffeinbringung bei Serienanfertigungen, da durch den Unterdruck die Hohlräume im Formkörper gesteuert bzw. ihr Ausmaß eingestellt werden können. Vor dem Harzeinbringen wird ein vorgegebener Druckwert eingestellt und daraufhin eine bestimmte Harzmenge eingebracht. Die Drucküberwachung in der Form hat ferner den Vorteil, daß z.B. bei Zerplatzen eines Hohlraumes der Unterdruck abrupt abfällt, welches diskontinuierlich auftretende Signal ausgewertet werden kann bzw. ein Maß für die Qualität des Formkörpers darstellt, da ein aufgeplatzter Hohlraum üblicherweise die Festigkeit des Formkörpers beträchtlich herabsetzt.

Der Zwischenbehälter 25 in der Leitung 23 ist vorgesehen, um bei der Herstellung des Formkörpers bzw. beim Durchsaugen des erwärmten Kunststoffes durch die Form 1 bis in die Leitung 23 zu verhindern, daß der Kunststoff in den Vakuumbehälter 26 eintritt. Eine Rückführleitung 42 mit einem Rückschlagventil 49 führt vom Zwischenbehälter 25 zurück in den Kunststoffbehälter 34.

Zu bemerken ist ferner, daß bei der Herstellung des Formkörpers der Unterdruck so lange aufrecht erhalten wird, bis der Kunststoff ausgehärtet ist. Das Ventil 24 bleibt so lange in Offenstellung, bis der Kunststoff in die Leitung 23 eingetreten ist bzw. das Ventil 24 passiert hat bzw. in den Zwischenbehälter 25 eingetreten ist. Daraufhin wird das Ventil 24 geschlossen und gleichzeitig wird das Ventil 37 geschlossen; die beiden Ventile bleiben so lange geschlossen bzw. der Unterdruck in der Form 1 bleibt so lange aufrecht erhalten, bis der Formkörper stabil ausgehärtet ist. Dies hat zur Folge, daß während des gesamten Aushärtvorganges der in den Holräumen der Lagen aufgebaute Druck erhalten bleibt und somit die Hohlräume die sie umgebenden verstärkten Kunststoffschichten gegen die Deckschichten pressen, so daß ein inniger Kontakt der Faser- und Kunststoffmaterialien im Formkörper vorliegt.

Über eine Leitung 40 und ein Absperrventil 41 ist der Kunststoffbehälter 34 mit der Unterdruckquelle 26 verbunden, wobei das Ventil 41 über eine Leitung 43 von der Steuereinrichtung 29 regelbar ist. Diese Anordnung dient insbesondere dazu, daß der flüssige Kunststoff 36 im Kunststoffbehälter 34 durch Anlegen eines Unterdrucks entgast werden kann, so daß blasenfreier Kunststoff der Form 1 zugeführt werden kann.

Der Unterdruck, der an die Form 1 angelegt wird, kann durch Steuerung der Vakuumpumpe 27 durch die Steuereinrichtung 29 über die Leitung 28 eingestellt werden.

Zu bemerken ist ferner, daß, ähnlich wie in Fig.3 dargestellt, auch die Formen, wie sie in Fig.1 und 2 dargestellt sind, erwärmt oder gekühlt werden können; entsprechende Heiz- und Kühleinrichtungen sind ohne weiteres vorsenbar.

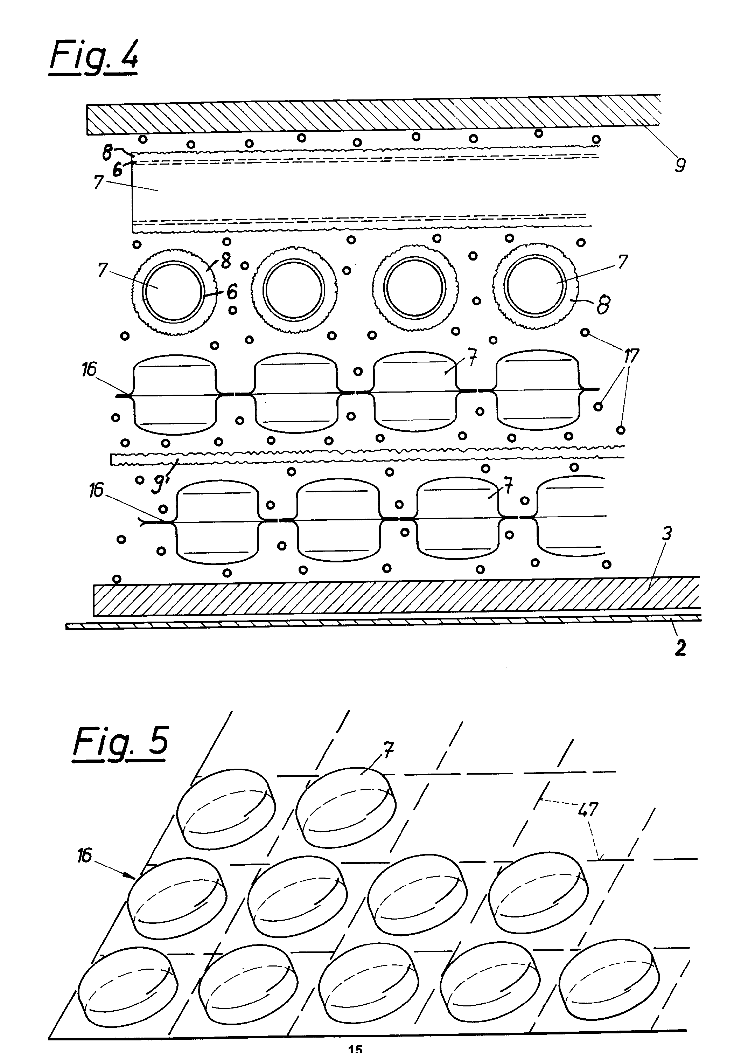

Fig.4 zeigt schematisch einen expandierten Schnitt durch einen Formkörper, so wie er in einer Form 1 aufgebaut werden kann. Zwischen zwei Deckschichten 3 und 9 werden zwei Lagen versetzter Polsterfolien 16 mit einer zwischen ihnen liegenden Laminateinlage 9' angeordnet, wie sie im Handel erhältlich sind; darüber werden zwei gekreuzte Lagen aus Kunststoffolienschläuchen 7 angeordnet. Zwischen diese Lagen werden Mikroballons 17 eingegeben, welche ein Verlegen der Durchflußzwischenräume für das einzusaugende Kunstharz nach Anlegen eines Unterdruckes verhindern und gleichzeitig das Gewicht des Formkörpers reduzieren. Anstelle oder gemeinsam mit den Mikroballons können auch geblähte mineralische Leichtfüllstoffe, z.B. auf Aluminium-bzw. Silikatbasis, eingegeben werden.

Werden, wie Fig.5 zeigt, Polsterfolien 16 eingesetzt oder in ähnlicher Weise aus zusammenhängenden Folien durch Verschweißen hergestellte Kunststoffschläuche, so empfiehlt es sich, um die Hohlräume bzw. in den zwischen den Hohlräumen liegenden Folien- bzw. Schweißflächen Löcher bzw.Perforationen 47 vorzusehen, welche ermöglichen, daß bei Anlegen des Unterdruckes im Formkörper bzw. Aufblähung der Luftpölster bei Erwärmung des Formkörpers die Flächen der Folie an den Perforationsstellen 47 zerreissen, die einzelnen Pölster ihre dem Platzangebot entsprechende Lage einnehmen, Kunststoff zwischen den Pölstern eindringen kann und eine Verbindung zwischen den äußeren Kunststoffschichten bzw. den die Lagen umgebenden Kunststoffschichten untereinander hergestellt werden kann.

Vorteilhaft ist die erfindungsgemäße Vorgangsweise auch zur Herstellung von vorgehärteten Halbfabrikaten bzw. Konstruktionsmaterialien einsetzbar. Dazu werden in der erfindungsgemäßen Vorgangsweise Bauteile aus den Kunststoffschichten und den Holhräume besitzenden Lagen erstellt, jedoch nicht bis zu einer Temperatur erwärmt, bei der der Kunststoff aushärtet. Diese derart hergestellten Formteile können zwischengelagert werden und sodann zur weiteren Verarbeitung eingesetzt werden. Im Zuge dieser weiteren Verarbeitung werden sie in gewünschter Weise angeordnet bzw in eine Form gebracht und durch weiteres Erwärmen bis zur Aushärtetemperatur des Kunststoffes ausgehärtet. Dies bringt den Vorteil, daß z.B. derartige vorgefertigte Halbfabrikate durch Vorerwärmen erweicht werden können, jedoch ihre innere Spannung bzw. der Zusammenhalt aufrecht erhalten bleiben, wenn sie in eine Form eingelegt werden.Bei weiterer Erwärmung und insbesondere bei Anlegen eines Unterdruckes, wird sodann ein Zustand hergestellt, wie er bei der Herstellung der vorgefertigten Halbfabrikate herrschte. Sodann kann durch weitere Erwärmung eine vollständige Aushärtung in die gewünschte Form erfolgen. Die bewährt sich insbesondere zur Herstellung von zweischaligen Körpern, z.B. von Hohlkörpern wobei vorgefertigte Halbfabrikate, z.B. durch Anlegen eines Unterdruckes, in eine zweischalige Form, d.h. jeweils ein Bauteil in einen Formteil, niedergezogen werden können, daraufhin die Formteile zusammengefügt werden und durch Einsatz von Unterdruck und Temperatur die beiden geformten Vorfabrikate miteinander zu einem Endfabrikat verbunden werden können.

Die Wandstärken der eingesetzten Kunststoffolienschläuche bzw. der Pölster beträgt vorzugsweise bis zu etwa 0,2 bis 0,25 mm. Insbesondere werden für diese Hohlräume Kunststoffmaterialien eingesetzt, die dehnbar sind und die erforderlichen Temperaturen aushalten. An sich ist ist jedoch auch möglich, daß bei den Erhärtungstemperaturen des Kunststoffes die den Hohlraum bildenden Materialien bereits geschmolzen sind, da der Kunststoff bei der Aushärtetemparatur bereits derart zäh ist, daß der Innendruck auch weiterhin durch die gewebeverstärkten Kunststoffschichten aufrecht erhalten werden kann und die Spannung der Formkörpers nicht absinkt.

Die zwischen die Lagen eingegebenen Mikroballons können bei Aufbau der Formkörpers eingestreut oder aufgestreut werden; überschüssige Mikroballons werden abgewischt, bevor die weiteren Schichten aufgebracht werden. Die Größe und die Anzahl der Mikroballons wird je nach der gewünschten Festigkeit gewählt.

Die hergestellten Formkörper sind bei hoher Festigkeit sehr leicht, darüberhinaus chemikalienbeständig, hitzebeständig und abwaschbar. Sie eignen sich insbesondere für solche Konstruktionen aller Art, bei welchen es bei hoher Festigkeit auf geringes Gewicht ankommt, insbesondere für den Schiffsbau, Flugzeugbau, für Sportgeräte aller Art, insbesondere Surfbretter, Surf- und Segelmasten, Segellatten, Skier, Snowboards usw.,

weiters für Aufbauten von Kraftfahrzeugen aller Art, für Möbel und Einrichtungsgegenstände, aber auch für das Bauwesen. Werden die hergestellten Formkörper aufgeschnitten, so läßt sich durch das von den Hohlräumen der Schläuche gebildete Hohlraumsystem eine Fluid-, z.B. Luftzirkulation erreichen.

Eine spezielle Art eines Formkörpers aus Kunststoff, mit im Vergleich zum Gewicht hoher Festigkeit, bei welchem zwischen zumindest zwei äußeren, durch Fasereinlagen verstärkten ausgehärteten Kunststoffschichten, insbesondere aus Epoxy oder Polyester, zumindest eine innere Lage angeordnet ist, die zumindest einen Hohlraum bildet, der mit einem Gas, insbesondere Luft, gefüllt ist, wobei diese Lage mit den Kunststoffschichten zu einem starren Körper verbunden ist, ist dadurch gekennzeichnet, daß die Lage zumindest einen zwischen den beiden äußeren Schichten verlaufenden langgestreckten Hohlraum 7 hat, der von einer faserverstärkten ausgehärteten Kunststoffschicht allseits umgeben und dicht abgeschlossen ist, welche Kunststoffschicht flächig an den beiden äußeren Schichten anliegt und mit diesen starr verbunden ist.

## Patentansprüche

1. Formkörper aus Kunststoff, mit im Vergleich zum Gewicht hoher Festigkeit, bei welchem zwischen zumindest zwei äußeren, durch Fasereinlagen verstärkten, ausgehärteten oder verfestigten (thermoplastischen) Kunststoff(harz)schichten (3,9), insbesondere aus Epoxy oder Polyester, zumindest eine innere Lage (5) angeordnet ist, die zumindest einen Hohlraum bildet bzw. umfaßt, der mit einem Gas, insbesondere mit Luft, gefüllt ist, wobei diese Lage(n) (5) mit den Kunststoff(harz)schichten (3,9) zu einem starren Körper verbunden ist (sind) und die bzw.jede Lage (5) zumindest einen zwischen den beiden äußeren Kunststoffschichtgen (3,9) gelegenen, dicht abgeschlossenen, gegebenenfalls langgestreckten, Hohlraum (7) aufweist, der von einer faserverstärkten, ausgehärteten oder verfestigten (thermoplastischen) Kunststoff(harz)schicht (8) allseits umgeben ist, welche Kunststoff(harz)schicht (8) flächig an den beiden äußeren Kunststoffschichten (3,9) anliegt und mit diesen fest bzw. starr verbunden ist, dadurch gekennzeichnet, daß der (die) Hohlraum(räume) (7) von dem (den) Innenraum(räumen) von in Bezug auf das Gas dichten bzw. dicht abgeschlossenen Kunststoffhüllen, vorzugsweise aus Polyester, Polypropylen, Polyäthylen oder PVC, insbesondere in Form von an ihren Enden dicht verschlossenen Schläuchen (6) oder dicht verschlossenen Pölstern (16), gebildet ist (sind), die von der faserverstärkten, ausgehärteten oder verfestigten Kunststoffschicht (8) umgeben sind, wobei die die durch einen äußeren Unterdruck aufgeweiteten Kunststoffhüllen umfassende Lage(n) (5) des kernlos ausgebildeten Formkörpers zwischen den Kunststoffschichten (3,9 weitgehend gasblasenfrei aneinander bzw. an den Kunststoffschichten (3,9) anliegt(en).

2. Formkörper nach Anspruch 1, dadurch gekennzeichnet, daß die Schläuche (6) mit der faserverstärkten ausgehärteten Kunststoffschicht (8) umwickelt sind.

3. Formkörper nach Anspruch 1 oder 2, dadurch gekennzeichnet, daß die Lage(n) (5) von Kunststoffschläuchen gebildet ist (sind), die in Gewebe eingenäht sind.

4. Formkörper nach einem der Ansprüche 1 bis 3, dadurch gekennzeichnet, daß zwischen der(n) Lagen(n) (5) bzw. zwischen der(n) Lage(n) (5) und den Kunststoffschichten (3,9), Mikroballons (17) aus Glas oder Kunststoff, vorzugsweise mit einem Durchmesser von 0,05 bis 0,3 mm, und/oder geblähte mineralische Leichtfüllstoffe, vorzugsweise mit einem Durchmesser von 0,05 bis 0,3 mm, angeordnet sind.

5. Verfahren zur Herstellung eines Formkörpers nach einem der Ansprüche 1 bis 4, bei welchem in einer Form zumindest zwei, aushärtbaren(s) oder verfestigbaren(s) (thermoplastisches) Kunststoffharz enthaltende bzw. damit getränkte Faser- bzw. Gewebeschichten (Kunststoffschichten) und dazwischen zumindest eine mit zumindest einem Hohlraum versehene Lage angeordnet werden, welche Lage(n) mit den Kunststoffschichten verbunden wird (werden), dadurch gekennzeichnet, daß für die Lage(n) zumindest ein mit einem Gas, insbesondere Luft, gefüllter, dicht abgeschlossener Hohlkörper mit biegsamen oder dehnbaren, seine Wände bildenden Kunststoffhüllen verwendet wird, der vor dem oder bei dem Einlegen in die Form mit einer Umhüllung aus Faser- bzw. Gewebeeinlagen umgeben wird, welche Umhüllung gegebenenfalls aushärtbaren(s) oder verfestigbaren(s) (thermoplastischen) Kunststoff(harz) enthält oder damit nach dem Einlegen in die Form getränkt wird und welche Umhüllung durch Aushärtung oder Verfestigung des in den Faser- bzw. Gewebeeinlagen enthaltenen oder des in diese eingebrachten Kunststoffes mit dem Kunststoff der Kunststoffschichten fest verbunden wird und daß zur Verbindung der Lage(n) mit den Kunststoffschichten bzw. zur Verbindung der Lagen untereinander der insbesondere kernlose Formkörper, gegebenenfalls nach oder bei gleichzeitiger Erwärmung desselben, in der Form einem Unterdruck (Vakuum) ausgesetzt wird bzw. in die Form niedergezogen wird, sodaß die Ausbildung des Verbindungsdruckes für die Kunststoffschichten und die Lage(n) im Formkörper ausschließlich durch Anlegen des Unterdruckes an den Formkörper und gegebenenfalls Erwärmung der in den Hohlräumen enthaltenen Luft und des damit verbundenen Aufblähens der in den Lagen vorgesehenen Hohlkörper erfolgt.

6. Verfahren nach Anspruch 5, dadurch gekennzeichnet, daß als Hohlkörper zumindest ein Kunststoffschlauch, vorzugsweise aus einem bei der Aushärtungstemperatur beständigen Kunststoff, insbesondere Polyester, Polypropylen, Polyäthylen oder PVC, verwendet wird, der an seinen Enden vor dem Einlegen in dir Form für das Gas dicht verschlossen wird.

7. Verfahren nach Anspruch 5 oder 6, dadurch gekennzeichnet, daß der (die) Hohlkörper vor dem Einlegen in die Form mit gegebenenfalls mit Kunststoff getränkten bzw. mit Kunststoff enthaltenden Gewebe bzw. Fasereinlagen umwickelt wird (werden).

8. Verfahren nach einem der Ansprüche 5 bis 7, dadurch gekennzeichnet, daß als durch Fasereinlagen verstärkter Kunststoff Pre-Pregs, vorzugsweise aus Epoxy oder Polyester, verwendet werden.

9. Verfahren nach einem der Ansprüche 5 bis 8, dadurch gekennzeichnet, daß nach dem Einlegen der durch Fasereinlagen verstärkten Kunststoffschichten bzw. der gegebenenfalls mit Kunststoff getränkten bzw. umgebenen Gewebe- bzw. Fasereinlagen und der Lagen mit den Hohlkörpern in die Form auf die obere Schicht bzw. Kunststoffschicht eine biegsame Schicht aus einem Material aufgelegt wird, welches am durch die Fasereinlagen verstärkten Kunststoff bzw. dem in den Fasereinlagen enthaltenen Kunststoff bei der Aushärtung desselben nicht haftet, insbesondere eine thermoplastische Kunststoffolie aufgelegt wird.

10. Verfahren nach Anspruch 9, dadurch gekennzeichnet, daß auf die biegsame Schicht eine gasdurchlässige Schicht., z.B. eine Juteschicht, aufgelegt wird.

11. Verfahren nach einem der Ansprüche 5 bis 10, dadurch gekennzeichnet, daß der Formkörper bzw. die Schichten bzw. die Kunststoffschichten und Lagen gegenenfalls auch die thermoplastischen Folien sowie die gasdurchlässige Schicht zwischen zwei luftundurchlässige Folien eingelegt werden, die an ihren aufeinandergelegten Rändern dicht verbunden, z.B. verschweißt, werden, worauf die von diesen beiden Folien eingeschlossene Luft mit Ausnahme des in den Hohlkörpern enthaltenen Gases evakuiert wird.

12. Verfahren nach einem der Ansprüche 5 bis 11, dadurch gekennzeichnet, daß nach Ausbildung des Unterdruckes bzw. Einstellung desselben auf einen gewissen Wert im Formkörper die Form mit einem Speicher für insbesondere erwärmtem Kunststoff (Kunstharz) verbunden und dieser Kunststoff vorzugsweise in einer vorgegebenen Menge in die Formkörper eingesaugt wird, wobei vorteilhafterweise der Unterdruck im Formkörperbzw. in der Form aufrechterhalten wird.

13. Verfahren nach einem der Ansprüche 5 bis 12, dadurch gekennzeichnet, daß der Formkörper während bzw. nach dem Evakuieren erwärmt wird.

14. Verfahren nach einem der Ansprüche 5 bis 13, dadurch gekennzeichnet, daß nach dem Einbringen des Kunststoffes in den Formkörper der Kunststoff im Formkörper, insbesondere durch Temperaturerhöhung, ausgehärtet wird.

15. Verfahren nach einem der Ansprüche 5 bis 14, dadurch gekennzeichnet, daß während der Temperaturerhöhung bzw. während des Aushärtens der Formkörper weiterhin unter Druck gehalten ist.

16. Verfahren nach einem der Ansprüche 5 bis 15, dadurch gekennzeichnet, daß die Temperatur und/oder der Unterdruck im Formkörper bzw. in der Form einregelbar sind.

17. Verfahren nach einem der Ansprüche 5 bis 16, dadurch gekennzeichnet, daß als Hohlräume besitzende Lagen im Formkörper Polsterfolien eingesetzt werden, deren Pölster voneinander gegebenenfalls durch Perforationslinien getrennt sind.

18. Verfahren nach einem der Ansprüche 5 bis 17, dadurch gekennzeichnet, daß zur Herstellung von vorgehärteten Formkörpern der Kunststoff im Formkörper nur bis zu einer Temperatur erwärmt wird, die unterhalb der Aushärtetemperatur des Kunststoffes gelegen ist.

19. Verfahren nach einem der Ansprüche 5 bis 18, dadurch gekennzeichnet, daß der Kunststoff vor dem Einbringen in die Form durch Anlegen eines Unterdruckes entlüftet und im wesentlichen gasblasenfrei in die Form eingebracht wird.

20. Einrichtung zur Herstellung von Formkörpern mit einer Form nach einem der Ansprüche 1 bis 4 bzw. zur Durchführung des Verfahrens nach einem der Ansprüche 5 bis 19, dadurch gekennzeichnet, daß die Form (1) zumindest einen zu einer Vakuumquelle (26) und/oder einer Vakuumpumpe (27) führenden Auslaß (44) und zumindest einen Anschluß (33) zum Ansaugen von Kunststoff (36) aus einem Behälter (34) für insbesondere erwärmten Kunststoff (36) aufweist.

21. Einrichtung nach Anspruch 20, dadurch gekennzeichnet, daß Absperrvorrichtungen (24,37) für die zur Form (1) führende Kunststoffzuleitung (45) und/oder die von der Form (1) abgehende Absaugleitung (23) vorgesehen sind.

22. Einrichtung nach Anspruch 20 oder 21, dadurch gekennzeichnet, daß eine Steuereinrichtung (29) für den Druck und/oder die Temperatur in der Form (1) und/oder die Menge des in die Form (1) angesaugten Kunststoffes (36) und/oder die Temperatur des angesaugten Kunststoff es (3) vorgesehen sind.

23. Einrichtung nach einem der Ansprüche 20 bis 22, dadurch gekennzeichnet, daß die Steuereinrichtung (29) mit der Heizung (35) des Kunststoffbehälters (34) und/oder den Absperrvorrichtungen (24, 37) und/oder einer Heizeinrichtung (19) bzw. Kühleinrichtung (20) für das durch Fluidleitungen (18) in der Form (1) geführte Heiz- bzw. Kühlfluid verbunden ist.

24. Einrichtung nach einem der Ansprüche 20 bis 23, dadurch gekennzeichnet, daß zur Entlüftung des Kunststoffes der Behälter (34) über eine gegebenenfalls mit einer Absperreinrichtung (43) versehene Leitung (40) mit der Unterdruckquelle (26) und/oder der Vakuumpumpe (27) verbunden ist.

**Claims**

1. Moulded body made of plastics material with high strength in comparison with the weight, in which at least one inner layer (5) is arranged between at least two outer hardened or consolidated (thermoplastic) plastics (resin) coats (3, 9), which are reinforced by fibre inserts and in particular are made of epoxy or polyester, which inner layer (5) forms or comprises at least one cavity which is filled with a gas, in particular air, this layer (or these layers) (5) being connected with the plastics (resin) coats (3, 9) to form a rigid body and the layer or each layer (5) having at least one cavity (7) which is situated between the two outer plastics coats (3, 9), is tightly sealed, if applicable is elongated and is surrounded on all sides by a fibre-reinforced, hardened or consolidated (thermoplastic) plastics (resin) coat (8), which plastics (resin) coat (8) rests areally against the two outer plastics coats (3, 9) and is fixedly or rigidly connected with the latter, characterised in that the cavity (cavities) (7) is (are) formed by the interior space(s) of plastics jackets which are tight or tightly sealed in respect of the gas and are preferably made of polyester, polypropylene, polyethylene or PVC, in particular in the form of tubes (6), which are tightly closed at their ends, or tightly closed cushions (16) which are surrounded by the fibre-reinforced, hardened or consolidated plastics coat (8), with the layer(s) (5), which comprise the plastics jackets widened by an external underpressure, of the moulded body formed without a core resting between the plastics coats (3, 9) largely free of gas bubbles against each other or the plastics coats (3, 9).

2. Moulded body according to claim 1, characterised in that the tubes (6) are wrapped with the fibre-reinforced, hardened plastics coat (8).

3. Moulded body according to claim 1 or 2, characterised in that the layer(s) (5) is (are) formed by plastics tubes which are sewn into woven fabric.

4. Moulded body according to one of the claims 1 to 3, characterised in that micro-balloons (17) of glass or plastics material, preferably with a diameter of 0,05 to 0,3 mm, and/or inflated mineral light filling materials, preferably with a diameter of 0,05 to 0,3 mm, are arranged between the layer(s) (5) or between the layer(s) (5) and the plastics coats (3, 9).

5. Method for producing a moulded body according to one of the claims 1 to 4, in which there are arranged in a mould at least two fibre or woven fabric coats (plastics coats) which contain or are impregnated with (thermoplastic) synthetic resin which is capable of being hardened or consolidated, and in between at least one layer provided with at least one cavity, which layer(s) is (are) connected with the plastics coats, characterised in that at least one hollow body, which is filled with a gas, in particular air, and is tightly sealed, with flexible or extensible plastics jackets forming its walls is used for the layer(s), which hollow body is surrounded before insertion or upon insertion into the mould with a covering of fibre or woven fabric inserts, which covering contains (thermoplastic) plastics (resin), which, if applicable, is capable of being hardened or consolidated, or is impregnated therewith after insertion into the mould and which covering is fixedly connected by means of hardening or consolidation of the plastics material, contained in the fibre or woven fabric inserts, or of the plastics material introduced into the latter with the plastics material of the plastics coats and in that for the purpose of connecting the layer(s) with the plastics coats or for the purpose of connecting the layers one with the other the moulded body, which in particular is core-less, if applicable after or with simultaneous heating of the same, is subjected to an underpressure (vacuum) in the mould or is drawn down into the mould so that the development of the connecting pressure for the plastics coats and the layer(s) in the moulded body occurs exclusively by application of the underpressure to the moulded body and, if applicable, heating of the air contained in the cavities and of the inflation associated therewith of the hollow bodies provided in the layers.

6. Method according to claim 5, characterised in that at least one plastics tube, preferably made of a plastics material which is stable at the hardening temperature, in particular polyester, polypropylene, polyethylene or PVC, is used as a hollow body which is tightly closed in respect of the gas at its ends before insertion into the mould.

7. Method according to claim 5 or 6, characterised in that the hollow body (bodies), before insertion into the mould, is (are) wrapped with woven fabric or fibre inserts impregnated, if applicable, with plastics material or containing plastics material.

8. Method according to one of the claims 5 to 7, characterised in that prepregs, preferably made of epoxy or polyester, are used as plastics material reinforced by fibre inserts.

9. Method according to one of the claims 5 to 8, characterised in that after insertion of the plastics coats, which are reinforced by fibre inserts, or of the woven fabric or fibre inserts, which, if applicable, are impregnated with or surrounded by plastics material, and of the layers with the hollow bodies into the mould, there is applied to the upper coat or plastics coat a flexible coat made of a material which does not adhere to the plastics material reinforced by the fibre inserts or the plastics material contained in the fibre inserts during the hardening of the same, in particular there is applied thereto a thermoplastic plastics foil.

10. Method according to claim 9, characterised in that a gas-permeable coat, for example a jute coat, is applied to the flexible coat.

11. Method according to one of the claims 5 to 10, characterised in that the moulded body or the coats or the plastics coats and layers, if applicable, also the thermoplastic foils and also the gas-permeable coat are inserted between two air-impermeable foils which are tightly connected, for example are heat-sealed, at their edges laid one on top of the other, whereupon the air enclosed by these two foils is evacuated with the exception of the gas contained in the hollow bodies.

12. Method according to one of the claims 5 to 11, characterised in that after development of the underpressure or adjustment of the same to a certain value in the moulded body, the mould is connected with a reservoir for, in particular, heated plastics material (synthetic resin) and this plastics material is drawn by suction, preferably in a preset quantity, into the moulded bodies, in which case advantageously the underpressure is maintained in the moulded body or in the mould respectively.

13. Method according to one of the claims 5 to 12, characterised in that the moulded body is heated during or after the evacuation.

14. Method according to one of the claims 5 to 13, characterised in that after the introduction of the plastics material into the moulded body the plastics material is hardened in the moulded body, in particular by temperature increase.

15. Method according to one of the claims 5 to 14, characterised in that during the temperature increase or during the hardening the moulded body is kept, further, under pressure.

16. Method according to one of the claims 5 to 15, characterised in that the temperature and/or the underpressure in the moulded body or in the mould can be regulated.

17. Method according to one of the claims 5 to 16, characterised in that cushion foils are used as layers which have cavities in the moulded body, the cushions of which are separated from each other, if applicable, by perforation lines.

18. Method according to one of the claims 5 to 17, characterised in that for the purpose of producing prehardened moulded bodies, the plastics material is heated in the moulded body only up to a temperature which lies below the hardening temperature of the plastics material.

19. Method according to one of the claims 5 to 18, characterised in that the plastics material is de-aerated before introduction into the mould by application of an underpressure and is introduced into the mould substantially free of gas bubbles.

20. Device for producing moulded bodies with a mould according to one of the claims 1 to 4 or for the purpose of carrying out the method according to one of the claims 5 to 19, characterised in that the mould (1) has at least one outlet (44) which leads to a vacuum source (26) and/or a vacuum pump (27) and at least one connection (33) for the purpose of drawing plastics material (36) by suction out of a container (34) for, in particular, heated plastics material (36).

21. Device according to claim 20, characterised in that shut-off arrangements (24, 37) are provided for the plastics supply line (45) leading to the mould (1) and/or the suction line (23) going off from the mould (1).

22. Device according to claim 20 or 21, characterised in that a control device (29) is provided for the pressure and/or the temperature in the mould (1) and/or the quantity of the plastics material (36) drawn by suction into the mould (1) and/or the temperature of the plastics material (3) drawn in by suction.

23. Device according to one of the claims 20 to 22, characterised in that the control device (29) is connected with the heating installation (35) of the plastics material container (34) and/or the shut-off arrangements (24, 37) and/or a heating device (19) or cooling device (20) for the heating or cooling fluid guided through fluid lines (18) in the mould (1).

24. Device according to one of the claims 20 to 23, characterised in that for the purpose of de-aerating the plastics material the container (34) is connected with the underpressure source (26) and/or the vacuum pump (27) by way of a line (40) provided, if applicable, with a shut-off device (43).

**Revendications**

1. Pièce moulée en matière plastique, d'une résistance élevée par rapport à son poids, dans laquelle est

11

disposée au moins une couche intérieure (5) entre au moins deux couches extérieures (3, 9) de (résine) de matière plastique (thermoplastique) renforcée par des intercalaires en fibres, durcie ou solidifiée, en particulier en époxy ou en polyester, la couche (5) formant ou comprenant au moins un espace creux rempli d'un gaz, en particulier d'air, cette (ces) couche(s) (5) étant rendue(s) solidaire(s) des couches (3, 9) de (résine) de matière plastique pour former une pièce rigide, et chaque couche (5) présentant au moins un espace creux (7) fermé hermétiquement, éventuellement allongé, situé entre les deux couches extérieures (3, 9) de matière plastique, l'espace creux (7) étant entouré partout d'une couche (8) de (résine) de matière plastique (thermoplastique) renforcée de fibres, durcie ou solidifiée, cette couche (8) de (résine) de matière plastique plaquant sur toute sa surface sur les deux couches extérieures (3, 9) de matière plastique et étant solidaire de celles-ci, pièce moulée caractérisée en ce que l'espace (les espaces) creux (7) est (sont) formé(s) par l'espace (les espaces) intérieur(s) d'enveloppes en matière plastique étanches au gaz ou fermées hermétiquement, de préférence en polyester, polypropylène, polyéthylène ou PVC, en particulier sous la forme de chambres à air (6) fermées hermétiquement à leurs extrémités ou de bulles (16) fermées hermétiquement, qui sont entourées par la couche (8) de matière plastique renforcée de fibres, durcie ou solidifiée, la (les) couche(s) (5) de la pièce moulée sans noyau, comprenant les enveloppes en matière plastique élargies par une dépression extérieure, venant largement plaquer les unes contre les autres sans bulles de gaz ou contre les couches (3, 9) de matière plastique.

2. Pièce moulée suivant revendication 1, caractérisée en ce que les chambres à air (6) sont enveloppées de la couche (8) de matière plastique durcie, renforcée de fibres.

3. Pièce moulée suivant la revendication 1 ou 2, caractérisée en ce que la (les) couche(s) (5) est (sont) formée(s) par des chambres à air en matière plastique, qui sont cousues dans un tissu.

4. Pièce moulée suivant l'une des revendications 1 à 3, caractérisée en ce que des micro-ballons (17) en verre ou en matière plastique, de préférence d'un diamètre de 0,05 à 0,3 mm, et/ou des matières de remplissage minérales légères expansées, de préférence d'un diamètre de 0,05 à 0,3 mm, sont disposés entre les couches (5) ou entre la (les) couche(s) (5) et les couches (3,9) de matière plastique.

5. Procédé de fabrication d'une pièce moulée suivant l'une des revendications 1 à 4, suivant lequel sont disposées dans un moule au moins deux couches de fibres ou de tissu (couches de matière plastique) contenant de la résine de matière plastique (thermoplastique) durcissable ou solidifiable, ou imprégnées de celle-ci, avec entre elles une couche prévue avec au moins un espace creux, cette (ces) couche(s) étant rendue(s) solidaire(s) des couches de matière plastique, caractérisé en ce que l'on utilise pour la (les) couche(s) au moins un corps creux rempli d'un gaz, en particulier d'air, fermé hermétiquement, avec des enveloppes en matière plastique souples ou extensibles formant ses parois, ce corps creux étant entouré d'une enveloppe constituée d'intercalaires en fibres ou en tissu, avant ou au moment de sa mise en place dans le moule, cette enveloppe contenant éventuellement une (résine de) matière plastique (thermoplastique) durcissable ou solidifiable, ou étant imprégnée de celle-ci après sa mise en place dans le moule, et cette enveloppe étant rendue solidaire de la matière plastique des couches en matière plastique par durcissement ou solidification de la matière plastique contenue dans les intercalaires en fibres ou en tissu, et en ce que, pour rendre solidaires la (les) couche(s) avec les couches de matière plastique ou pour rendre les couches solidaires entre elles, la pièce moulée en particulier sans noyau, le cas échéant après ou lors du chauffage simultané de celle-ci, est exposée à une dépression (vide) dans le moule ou on la fait plaquer contre la paroi intérieure du moule, de sorte que la formation de la pression de liaison pour les couches de matière plastique et la (les) couche(s) dans la pièce moulée se produit exclusivement par application de la dépression contre la pièce moulée et le cas échéant chauffage de l'air contenu dans les espaces creux et gonflage des corps creux prévus dans les couches.

6. Procédé suivant la revendication 5, caractérisé en ce que l'on utilise comme corps creux au moins une chambre à air en matière plastique, de préférence en matière plastique résistante à la température de durcissement, en particulier polyester, polypropylène, polyéthylène ou PVC, cette chambre à air étant fermée hermétiquement à ses extrémités, de façon à être étanche au gaz, avant sa mise en place dans le moule.

7. Procédé suivant la revendication 5 ou 6, caractérisé en ce que le (les) corps creux est (sont) entouré(s), avant mise en place dans le moule, éventuellement d'intercalaires en fibres ou en tissu imprégnés de matière plastique ou contenant de la matière plastique.

8. Procédé suivant l'une des revendications 5 à 7, caractérisé en ce que, comme matière plastique renforcée d'intercalaires en fibres, on utilise des verres textiles préimprégnés, de préférence en époxy ou en polyester.

9. Procédé suivant l'une des revendications 5 à 8, caractérisé en ce que, après la mise en place des couches de matière plastique renforcée d'intercalaires en fibres, ou des intercalaires en tissu ou en fibres éventuellement imprégnés ou entourés de matière plastique, et des couches avec les corps creux dans le moule, on applique sur la couche supérieure ou sur la couche en matière plastique une couche souple constituée d'une matière n'adhérant pas à la matière plastique renforcée d'intercalaires en fibres ou à la matière plastique contenue dans les intercalaires en fibres lors du durcissement de cette matière plastique ; on applique en particulier une feuille de matière thermoplastique.

10. Procédé suivant la revendication 9, caractérisé en ce que l'on applique sur la couche souple une couche perméable au gaz, par exemple une couche de jute.

11. Procédé suivant l'une des revendications 5 à 10, caractérisé en ce que la pièce moulée et/ou les couches de corps creux et/ou les couches de matière plastique et/ou les couches intérieures, le cas échéant également les feuilles thermoplastiques ainsi que la couche perméable au gaz, sont mis en place entre deux feuilles imperméables à l'air, qui sont hermétiquement reliées sur leurs bords superposés, par exemple soudées, sur lesquelles l'air occlus entre ces deux feuilles est évacué, à l'exception du gaz contenu dans les corps creux.

12. Procédé suivant l'une des revendications 5 à 11, caractérisé en ce que, après formation de la dépression ou réglage de celle-ci à une certaine valeur dans la pièce moulée, le moule est mis en communication avec une masselotte en particulier pour une matière plastique (résine plastique) chauffée et cette matière plastique est aspirée dans la pièce moulée de préférence dans une quantité prédéterminée, la dépression étant avantageusement maintenue dans la pièce moulée ou dans le moule.

13. Procédé suivant l'une des revendications 5 à 12, caractérisé en ce que la pièce moulée est chauffée pendant ou après la mise sous vide.

14. Procédé suivant l'une des revendications 5 à 13, caractérisé en ce que, après mise en place de la matière plastique dans la pièce moulée, la matière plastique de la pièce moulée est durcie, en particulier par augmentation de la température.

15. Procédé suivant l'une des revendications 5 à 14, caractérisé en ce que, pendant l'augmentation de la température ou pendant le durcissement, la pièce moulée continue à être maintenue sous pression.

16. Procédé suivant l'une des revendications 5 à 15, caractérisé en ce que la température et/ou la dépression dans la pièce moulée ou dans le moule sont réglables.

17. Procédé suivant l'une des revendications 5 à 16, caractérisé en ce que des feuilles à bulles sont mises en place dans la pièce moulée sous forme de couches possédant des espaces creux, dont les bulles sont séparées les unes des autres éventuellement par des lignes de perforation.

18. Procédé suivant l'une des revendications 5 à 17, caractérisé en ce que, pour la fabrication de pièces moulées prédurcies, la matière plastique dans la pièce moulée doit être chauffée uniquement jusqu'à une température située au-dessous de la température de durcissement de la matière plastique.

19. Procédé suivant l'une des revendications 5 à 18, caractérisé en ce que la matière plastique, avant mise en place dans le moule, est mise sous vide par application d'une dépression et est mise en place essentiellement sans bulles de gaz dans le moule.

20. Dispositif pour fabrication de pièces moulées avec un moule suivant l'une des revendications 1 à 4 ou pour exécution du procédé suivant l'une des revendications 5 à 19, caractérisé en ce que le moule (1) présente au moins un orifice de sortie (44) vers une source de vide (26) et/ou une pompe à vide (27) et au moins une prise (33) pour aspiration de la matière plastique (36) dans un réservoir (34) pour en particulier une matière plastique (36) chauffée.

21. Dispositif suivant la revendication 20, caractérisé en ce que des dispositifs d'arrêt (24, 37) sont prévus pour la tuyauterie d'arrivée de matière plastique (45) conduisant au moule (1) et/ou la tuyauterie d'aspiration (23) partant du moule (1).

22. Dispositif suivant la revendication 20 ou 21, caractérisé en ce qu'un dispositif de commande (29) est prévu pour la pression et/ou la température dans le moule (1) et/ou la quantité de matière plastique (36) aspirée dans le moule (1) et/ou la température de la matière plastique (3) aspirée.

23. Dispositif suivant l'une des revendications 20 à 22, caractérisé en ce que le dispositif de commande (29) est relié au dispositif de chauffage (35) du réservoir de matière plastique (34) et/ou aux dispositifs d'arrêt (24, 37) et/ou à un dispositif de chauffage (19) ou un dispositif de refroidissement (20) pour le fluide de chauffage ou de refroidissement amené dans le moule (1) par des conduites (18).

24. Dispositif suivant l'une des revendications 20 à 23, caractérisé en ce que, pour l'évacuation de l'air contenu dans la matière plastique, le réservoir (34) est relié à la source de vide (26) et/ou à la pompe à vide (27) par une tuyauterie (40) éventuellement munie d'un dispositif d'arrêt (43).

*Fig._1*

*Fig._2*

*Fig._3*

# Fig. 4

# Fig. 5